# EUROPEAN PATENT SPECIFICATION

(11) **EP 2 110 216 B1**
(45) Date of publication and mention of the grant of the patent: **05.06.2013**
(21) Application number: 08154493.4
(22) Date of filing: 14.04.2008
(51) Int. Cl.: B28D 5/00, B28D 5/04, B23D 57/00

(54) **Wire saw device and method for operating same**
Drahtsägevorrichtung und Betriebsverfahren dafür
Dispositif de scie à fil et son procédé de fonctionnement

(43) Date of publication of application: 21.10.2009
(73) Proprietor: Applied Materials, Inc., Santa Clara, CA 95054 (US)
(72) Inventor: Schneeberger, Stefan, 1595 Faoug (CH); Nasch, Philippe, 1052 Le Mont-sur-Lausanne (CH); Thommen, Cedric, 1807 Blonay (CH)
(74) Representative: Zimmermann & Partner

(56) References cited:
- EP-A2- 0 734 824
- WO-A-2008/015895
- US-A1- 2007 283 944
- US-B1- 6 234 159

## Description

### FIELD OF THE INVENTION

The invention relates to a wire saw device and a method for operating such a wire saw device. More particularly, the invention relates to a wire saw device for cutting silicon wafers from silicon ingots.

### BACKGROUND OF THE INVENTION

There exist wire saw devices for cutting thin slices, e.g. semiconductor wafers, from a piece to be sawed, e.g. an ingot or block of semiconductor material. In such devices a stretched wire is both guided and tensioned by wire guide cylinders. These wire guide cylinders are generally covered with a layer of synthetic resin and are scored with grooves having very precise geometry and size. The wire is spirally wound about the wire guide cylinders and forms between two wire guide cylinders at least one layer of parallel wires, also called a web or wire web. In the web, the distance between two consecutive wires fixes the thickness of the slices. During the sawing process, the wire is moved with considerable speed. Because of the spiral winding, all the wires of the layer of wires move parallel generating a force perpendicular to the advance of a support beam holding the piece to be sawed. During sawing, the piece to be sawed is moved through the wire web wherein the speed of this movement determines the cutting speed and/or the effective cutting area that can be sawed within a given amount of time, e.g. within an hour. The maximum speed for moving the piece through the web, and also the maximum effective cutting area within a given amount of time, is limited by several factors including wire speed, hardness of the material to be sawed, and the like.

US 2007/0283944 A describes an abrasive wire sawing device.

US 6 234 159 describes a wire saw for cutting shaped articles from a workpiece, having at least two wire webs made from sawing wire, which are used for cutting off the shaped articles and which lie one above the other at a distance h and are tensioned between wire-guide rollers. The wire saw includes two roller systems, which are driven independently of one another. Each roller system has two rotatably mounted wire-guide rollers, around each of which systems a sawing wire is wound. During operation of the wire saw, the sawing wire running around one roller system is unwound from a first and a second stock reel and is wound onto a first and a second receiving reel. The wire-guide rollers of each wire webs belongs to a separate roller system, each roller system using a dedicated sawing wire.

In view of the above, a wire saw device according to independent claim 1 is provided. Further advantages, features, aspects and details are apparent from the dependent claims, the description and drawings.

According to one embodiment, a wire saw device for sawing semiconductor material is provided. The wire saw device includes a wire guide device adapted to guide a wire for forming at least one wire web for sawing the semiconductor material, wherein the wire guide device includes at least a first wire guide cylinder and a second wire guide cylinder, at least two wire management units (130, 140) each adapted for providing a wire to the wire guide device, wherein a first wire management unit (130) of the at least two wire management units provides a first wire for forming a first wire web (204) by providing the wire to the first wire guide cylinder and to the second wire guide cylinder and a second wire management unit (140) of the at least two wire management units provides a second wire for forming a second wire web (208) by providing the wire to the first wire guide cylinder and to the second wire guide cylinder, wherein the wire guide device and the at least two wire management units are adapted to provide the at least one wire web (200) such that an effective cutting area of 12 m²/h or more is provided.

According to a further embodiment, a method for in-situ cleaning of semiconductor wafers is provided. This method includes attaching a semiconductor material block to a beam having at least one conduit for feeding cleaning fluid, sawing, with a wire saw device, the semiconductor material block to obtain a plurality of semiconductor wafers and further sawing the beam such that fluid communication between the at least one conduit and a space between the semiconductor wafers is established, and supplying cleaning fluid to the at least one conduit to clean the semiconductor wafers.

According to another embodiment, a method for demounting semiconductor wafers from a beam after sawing is provided. The method includes sawing, with a wire saw device, the semiconductor material block in a direction of a predefined slicing plane to obtain a plurality of semiconductor wafers, sawing a beam to which said semiconductor wafers are attached in the direction of the predefined slicing plane, and sawing the beam in a direction substantially perpendicular of the predefined slicing plane.

Embodiments are also directed at apparatuses for carrying out the disclosed methods and including apparatus parts for performing each described method step. These method steps may be performed by way of hardware components, a computer programmed by appropriate software, by any combination of the two or in any other manner. Furthermore, embodiments according to the invention are also directed at methods by which the described apparatus operates. It includes method steps for carrying out every function of the apparatus.

### BRIEF DESCRIPTION OF THE DRAWINGS

A full and enabling disclosure of the present invention, including the best mode thereof, to one of ordinary skill in the art, is set forth more particularly in the remainder of the specification, including reference to the accompanying figures, wherein:

Fig. 1 shows a schematic front view of a wire saw device.

Fig. 2 shows a schematic top view of a wire saw device.

Fig. 3 shows a schematic front view of a wire saw device according to another embodiment.

Fig. 4A shows a schematic top view of a wire saw device according to the embodiment shown in Fig. 3.

Fig. 4B shows a schematic side view of a wire saw device according to the embodiment shown in Fig. 4A.

Fig. 5A shows a schematic top view of a wire saw device according to a further embodiment.

Fig. 5B shows a schematic side view of a wire saw device according to the embodiment shown in Fig. 5A.

Fig. 6 shows a schematic side view of a wire guide cylinder according to an embodiment.

Fig. 7 shows a schematic front view of a wire saw device according to a further embodiment.

Fig. 8 shows a nozzle arrangement according to an embodiment.

Fig. 9 shows a schematic perspective view of a modular cutting head according to an embodiment.

Figs. 10A and 10B show embodiments of a wire breakage detection unit.

Fig. 11 shows embodiments of a wafer box and wafer baskets.

Fig. 12 shows a schematic front view of a wire saw device according to an embodiment.

Fig. 13 shows a detail of a beam according to an embodiment.

Fig. 14 is a flow diagram of a cleaning method according to an embodiment.

Fig. 15 is a flow diagram of a dismounting method according to an embodiment.

### DETAILED DESCRIPTION OF THE INVENTION

Reference will now be made in detail to the various embodiments of the invention, one or more examples of which are illustrated in the figures. Within the following description of the drawings, the same reference numbers refer to same components. Generally, only the differences with respect to individual embodiments are described. Each example is provided by way of explanation of the invention and is not meant as a limitation of the invention. For example, features illustrated or described as part of one embodiment can be used on or in conjunction with other embodiments to yield yet a further embodiment. It is intended that the present invention includes such modifications and variations.

Furthermore, in the following description a wire management unit will be understood as a device handling the supply of wire to a working area a wire saw device. Typically, the wire management unit includes a wire guide for transporting and guiding the wire in a wire moving direction while the wire management unit provides control of the wire tension. Furthermore, the wire provided by the wire management unit forms a wire web as described above. In the following, a wire web will be considered as the web formed by a single wire management unit. It should be understood that a wire web may contain more than one working areas which are defined as areas in which a sawing process is performed.

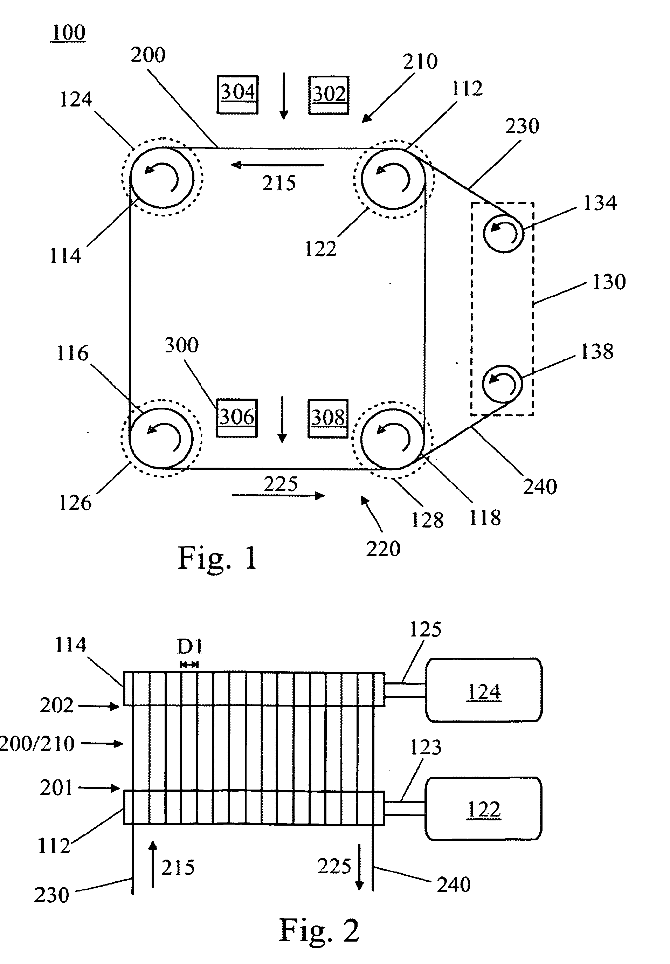

Fig. 1 shows a schematic front view of a wire saw device 100 according to an example useful for understanding the invention. Wire saw device 100 has a wire guide device 110 including four wire guide cylinders 112, 114, 116, 118. A wire management unit 130 provides a wire to the wire guide cylinders 112, 114, 116, 118. The wire management unit 130 includes a supply coil 134 on which a wire reservoir, typically holding several hundred kilometers of wire, is provided. Fresh wire 230 is fed to wire guide device 110 from supply coil 134. Furthermore, wire management unit 130 includes a take-up spool 138 on which the used wire 240 is recoiled. In the example shown in Fig. 1, the rotational axis of supply coil 134 and take-up spool 138 are parallel to the rotational axes of the wire guide cylinders 112, 114, 116, 118. Accordingly, no deflection pulley or similar device is required for feeding the wire to the wire guide 110. Due to the zero degree angle on the wire, the risk of wire breakage can be reduced. Typically, wire management unit 130 includes further devices such as low inertia pulleys (not shown) and tension arms (not shown) for wire tension regulation. In some embodiments, digital coders are provided on the tension arms.

Fig. 2 shows a schematic top view of wire saw device 100 according to an example useful for understanding the invention. Therein, the wire is spirally wound about the wire guide cylinders 112, 114 and forms between the two wire guide cylinders a layer 200 of parallel wires. This layer is typically referred to as a wire web 200. Typically, wire guide cylinders 112, 114, 116, 118 are covered with a layer of synthetic resin and are scored with grooves having very precise geometry and size. The distance between the grooves determines the distance D1 between two adjacent strings or lines of wire. This distance D1 also determines the thickness of the slices cut by the wire saw device. Typically, the wire thickness is between 120 µm and 140 µm while distance D1 is in the range of 150 µm to 180 µm. Accordingly, the thickness of the wire is of the same order as the distance D1. Furthermore, each wire guide cylinder 112, 114, 116, 118 is connected to a motor 122, 124, 126, 128 (shown in broken lines in Fig. 1). In the examples shown in Figs. 1 and 2, wire guide cylinders 112, 114, 116, 118 are directly driven by motors 122, 124, 126, 128. As shown in Fig. 2, each wire guide cylinder 112, 114 may be directly mounted to the motor shaft 123, 125 of the corresponding motor 122, 124. In some embodiments one or more of the motors are water-cooled.

During operation, e.g. during the sawing process, the motors 122, 124, 126, 128 drive the wire guide cylinders 112, 114, 116, 118 so that the wire guide cylinders rotate about their longitudinal axis. Thus, the wire in wire web 200 is transported into a wire transport direction 215, 225. In some embodiments, the transport speed of the wire is relatively high for example as much as 20 m/s. In one embodiment, one of the motors, e.g. motor 122, serves as a master motor whereas the remaining motors 124, 126, 128 serve as slave motors. In other words, master motor 122 controls the operation of slave motors 124, 126, 128 so that slave motors 124, 126, 128 follow master motor 122. Thus, synchronicity of operation of motors 122, 124, 126, 128 is improved and can be maintained during the sawing process.

Going back to Fig. 1, the wire saw device 100 includes four wire guide cylinders 112, 114, 116, 118 which guide the wire so that it forms web 200. The material to be sawed, e.g. blocks 302, 304, 306, 308 of semiconductor material, is attached to a holder. For example, silicon ingots 302, 304, 306, 308 may be mounted to a support mechanism which is not shown in Fig. 1 but will be explained later. In order to saw blocks 302, 304, 306, 308, the blocks 302, 304, 306, 308 are lowered toward web 200. The wire is transported in wire moving direction 215, 225 at a considerable speed, e.g. between 15 m/s and 20 m/s. When blocks 302, 304, 306, 308 are pressed against the wire web 200 in a working area 210, 220 of web 200, the moving wire abrades the semiconductor material and, thus, saws blocks 302, 304, 306, 308 into thin slices having a width D1. Such slices may for example be used as wafers in semiconductor industry. The total length of wire in the wire web being in contact with the material to be sawed at a time may be referred to as the effective wire cutting length. In some embodiments, the effective wire cutting length is 700 m or above, particularly the effective wire cutting length may be more than 900 m. Furthermore, the speed with which the material to be sawed is lowered into the wire web may be referred to as the material feed rate. In some embodiments, the material feed rate is in the range of 3 µm/s to 12 µm/s, typically about 5 µm/s to 7 µm/s.

Due to the geometry of wire guide device 110, wire web 200 includes a first working area 210 and a second working area 220. The sawing process can be simultaneously carried out in both working areas 210, 220 so that efficiency of sawing device 100 is improved. Furthermore, in the shown embodiment each working area 210, 220 is sufficiently large such that two blocks 302, 304; 306, 308 of semiconductor material can be processed in each working area 210; 220. In one embodiment, the working length of web 200 in a working area 210, 220 along the wire moving direction 215, 225 is between 500 mm to 600 mm.

In a wire saw device 100 according to embodiments described herein, the wire guide device 110 and the at least two wire management units 130 are adapted to provide a wire web 200 such that an effective cutting area of 12 m²/h or more is provided. In some embodiments, the total cut surface sawed in one cut is about 160 m². In some embodiments, the number of wafers obtained within a single cut is 5,000 or more. In some embodiment, the footprint of the machine is about 10 to 14 m². Thus, wire saw devices according to embodiments described herein provide improved efficiency and higher throughput compared with conventional wire saw devices.

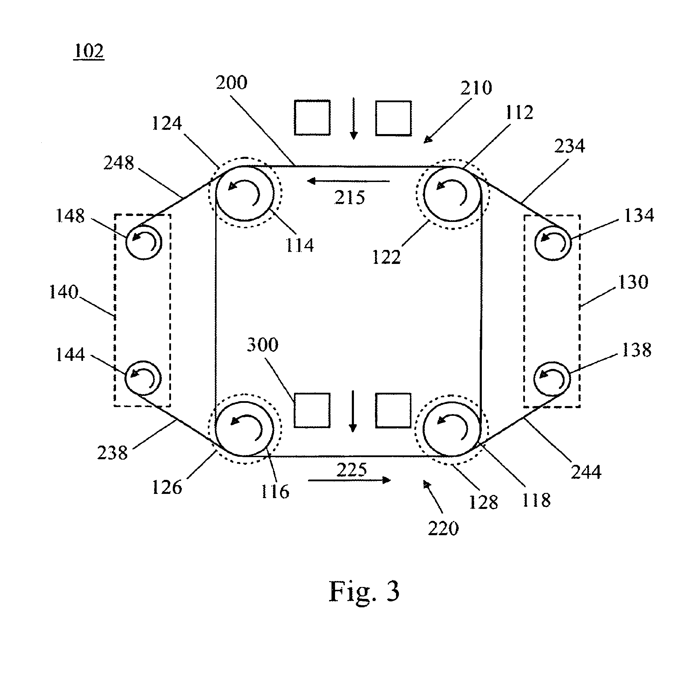

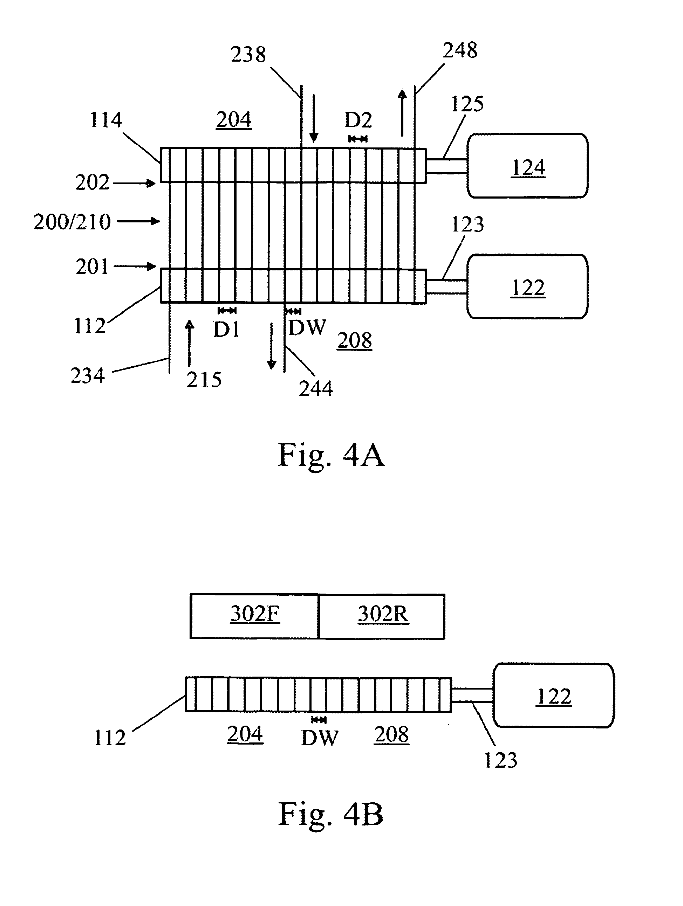

Fig. 3 shows a schematic front view of a wire saw device 102 according to another embodiment. Wire saw device 102 includes a further wire management unit 140 which is similar to wire management unit 130 described above. Second wire management unit 140 includes a wire supply coil 144 and a take-up spool 148. Wire supply coil 144 provides fresh wire 238 and take-up spool 148 recoils used wire 248. As shown in Fig. 4A, first management unit 130 provides a first wire for forming a first wire web 204 while second wire management unit 140 provides a second wire for forming a second wire web 208. First web 204 is located at the front end side of the wire guide cylinders 112, 114 and second web 208 is located at the rear end side of wire guide cylinders 112, 114 adjacent to motors 122, 124. In first web 204, two adjacent strings or lines of wire are spaced by distance D1 while in second web 208 two adjacent strings or lines of wire are spaced by a distance D2. Furthermore, first and second webs 204, 208 are spaced by a distance DW. However, distances D1, D2, and DW are defined by the grooves in wire guide cylinders 112, 114. Since these grooves are equidistant, distances D1 and D2 are identical, and also DW may be selected to be identical. Furthermore, the wire guide cylinders drive both the first and second web 204, 208 so that the wire speed is identical for the first and second web 204, 208. Furthermore, the wire transport directions of the first and second webs 204, 208 will be identical. Since second wire management unit 140 is a mirrored with respect to first wire management unit 130, the wire feeding direction and wire recoil directions are reversed. Furthermore, first wire web 204 is fed in the middle of the wire guide cylinder In view of the above, the first and second webs 204, 208 have identical properties and appear as a single continuous web 200. In other words, a composite web 200 is formed by the first and second webs 204, 208 wherein the composite web is continuous in its properties so that there exists no difference to a single web with respect to the cutting process. In particular, composite web 200 is adapted for cutting the blocks of semiconductor material. Embodiments including a composite web 200 formed from separate wire webs 204, 208 are advantageous in that wire length of one web in a working area 210, 220 is only half of the length compared to a single wire web as it is shown in Fig. 2. When using the same amount of wire in the wire reservoir, the wire length which can be utilized for sawing is doubled.

Fig. 4B shows a schematic side view of a wire saw device according to the embodiment shown in Fig. 4A. Therein, it can be seen that first wire web 204 and second wire web 208 are arranged in a row on wire guide cylinder 112. Furthermore, in this embodiment, a first or front block 302F of semiconductor material is located in the working area of first web 204. In addition, a second or rear block 302R of semiconductor material is located in the working area of second web 208. During the sawing process, front block 302F is cut by first web 204 and rear block 302R is cut by rear web 208. In a typical embodiment, each of the blocks will have a longitudinal length of about 250 mm and will have a surface of 156 mm by 156 mm. It should be understood that the same arrangement of two consecutive blocks of semiconductor material can also be chosen for the other positions 304, 306, and 308. As a result, the sawing device shown in Fig. 3 is adapted to simultaneously saw 8 blocks of semiconductor material, namely two upper front blocks 302F, 304F with working area 210 of first web 204, two lower front blocks 306F, 308F with working area 220 of first web 204, two upper rear blocks 302R, 304R with working area 210 of second web 208, and two lower rear blocks 306R, 308R with working area 220 of second web 208. In such arrangement, up to 6,000 wafers and more may be obtained in a single sawing process. Furthermore, the described arrangement increases redundancy. For example, when a wire breakage occurs in one of the wire webs 204, 208, the remaining web may still be used to saw the semiconductor material. Thus, only half of the batch is lost instead of the complete batch. Thus, efficiency and throughput are considerably improved.

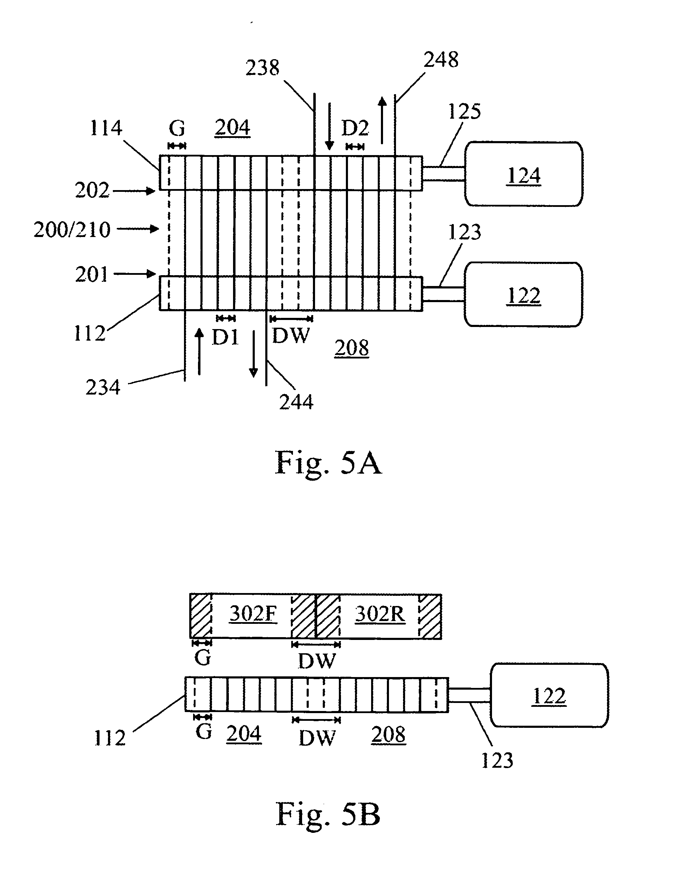

Fig. 5A shows a schematic top view of a wire saw device according to a further embodiment. The overall configuration is similar to the embodiment shown in Figs. 4A and 4B. However, the longitudinal length of first and second webs 204 and 208 is reduced in that gaps of width G are provided at the beginning and the end of the webs. Therein, gap G should be understood as a region without wire web but grooves on the wire guide cylinders. In other words, the gaps G on wire guide cylinder 112 are not used for providing a wire web. As a result, each of the first and second wire webs 204, 208 has a reduced longitudinal length compared to the arrangement shown in Fig. 4A as is also indicated by the dashed lines. Accordingly, the distance DW between first and second webs 204, 208 may be determined as DW = 2 G + D1. Of course, the distance DW may be increased if desired.

The effect of such an arrangement is now described with reference to Figs. 5B wherein Fig. 5B shows a schematic side view of a wire saw device according to the embodiment shown in Fig. 5A. The hatched areas of front block 302F and rear block 302R indicate portions of semiconductor material which will not be cut by first and second webs 204, 208. In other words, the front and rear ends of the semiconductor blocks 302F, 302R can be ignored in the sawing process. Since semiconductor blocks often contain impurities and hard spots in these portions, the risk of wire breakage can be reduced. Furthermore, "cropping" of the blocks, i.e. cutting off head and tail, before wafering may be omitted. Thus, the number of operations can be reduced.

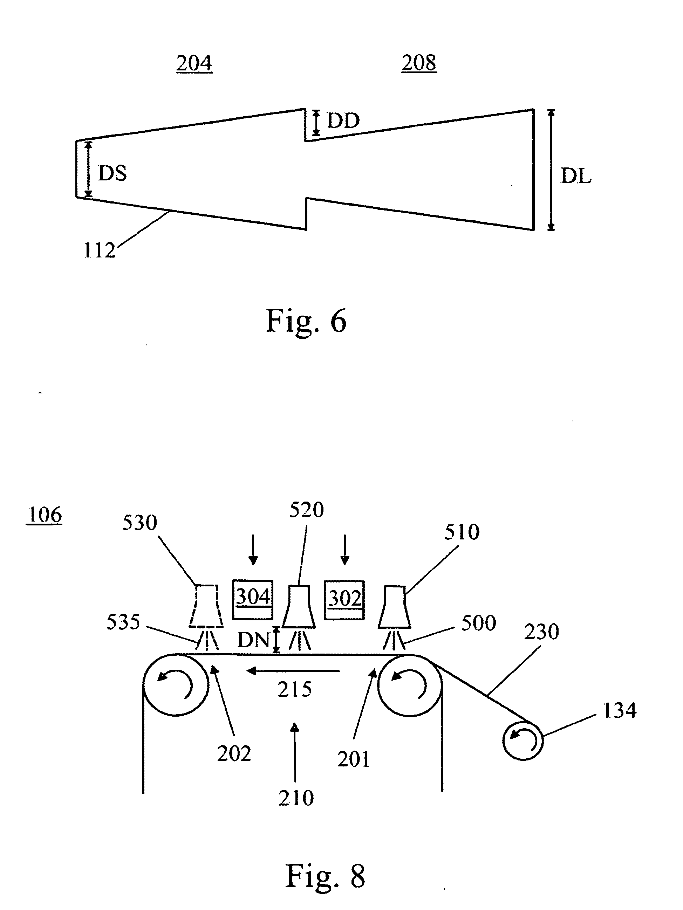

Fig. 6 shows a schematic side view of a wire guide cylinder according to an embodiment. Therein, wire guide cylinder 112 is not exactly cylindrically but has the shape of a double cone. Each cone has a smaller diameter DS at a small diameter end and a large diameter DL at a large diameter end. The cones are arranged so that the small diameter end of the rear cone and the large diameter end of the front cone adjoin each other. The front cone of wire guide cylinder 112 is adapted to guide first web 204 and the rear cone of wire guide cylinder 112 is adapted to guide second web 208. The difference DD between the small diameter DS and the large diameter DL is chosen such that a loss of tension within the wire between the feeding end of the wire web and the recoil end of the wire web is compensated. For example, such loss of tension may occur due to wear off of the wire during the sawing process. For example, an additional length of about 1 mm may be required to compensate the tension loss. In a sawing machine having four wire guide cylinders, e.g. a sawing device as shown in Fig. 3, the 1 mm additional length will be equally distributed between the four wire guide cylinders. Accordingly, the difference DD will be 0.25 mm for each cylinder, adding up to a total of 1 mm additional length at the large diameter end of the cone. In a sawing machine using only two wire guide cylinders, the difference DD will be 0.5 mm for each cylinder, also adding up to a total of 1 mm additional length at the large diameter end of the cone.

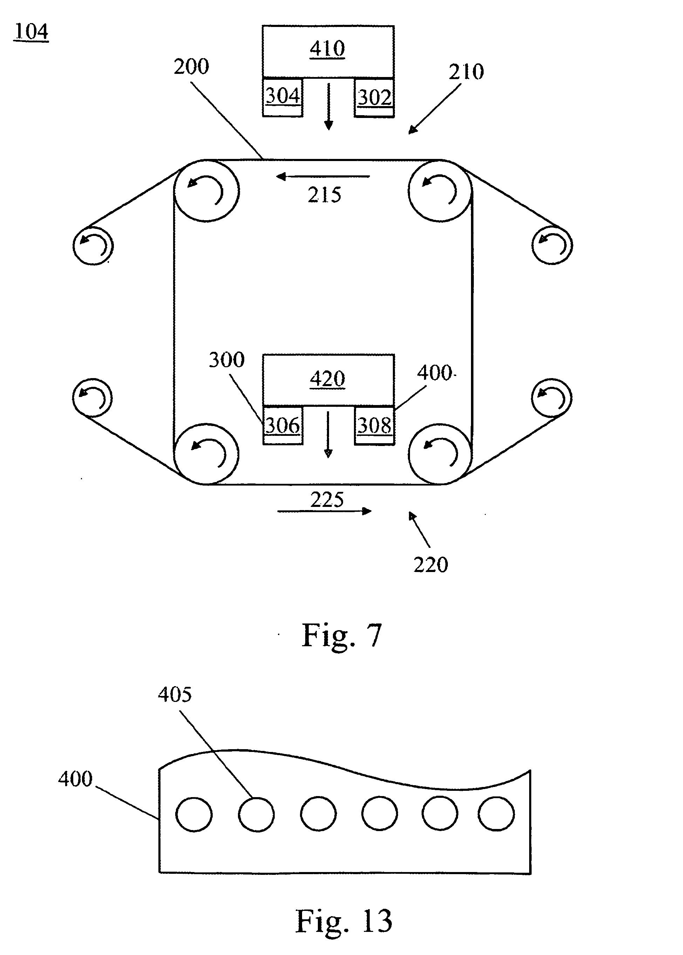

Fig. 7 shows a schematic front view of a wire saw device 104 according to a further embodiment. As described above, the wire guide device 110 is adapted to form two working areas 210, 220 of wire web 200. Wire saw device 104 further includes a first holder 410 and a second holder 420. First and second holders 410, 420 each are adapted to hold blocks of material to be sawed. First holder 410 holds upper blocks 302, 304 and second holder 420 holds lower blocks 306, 308. First holder 410 is located above first working area 210 of web 200 and second holder 420 is located above second working area 220 of web 200. First and second holders 410, 420 are adapted to advance their respective blocks to web 200 during the sawing process. For example, first and second holders 410, 420 are lowered so that the respective semiconductor blocks contact web 200. In one embodiment, the movement of first holder 410 is independent of the movement of second holder 420. In particular, the first and second holders 410, 420 can be moved independently relative to the corresponding working areas 210, 220 of the wire web 200. For example, first and second holders 410, 420 can be separately driven and controlled. Such independent movement of first and second holders 410, 420 is useful since the wire of web 200 not only abrades the semiconductor material of blocks 302, 304, 306, 308 but also the surface coating of the wire guide cylinders. Due to this abrasion, the diameter of the wire guide cylinders reduces with time. As a result, the plane of upper working area 210 lowers while the plane of lower working area 220 moves up. In other words, the upper and lower working areas 210, 220 of web 200 approach each other moving in opposite directions. In order to control the sawing process and, in particular, take account of the above-described effect of abrasion, the upper and lower holders 410, 420 can be controlled independently. For example, upper holder 410 may be lowered more and lower holder 420 may be lowered less in order to compensate for the reduced diameter effect.

The above embodiment is described with two wire management units.

Fig. 8 shows a detail of the upper working area 210 and, particularly, a nozzle arrangement according to an embodiment. Therein, the wire in working area 210 moves from a starting side 201 of the working area 210 to an end side 202 of the working area 210 in a wire moving direction 215. Furthermore, a first nozzle 510 is mounted in the vicinity of the starting side 201. First nozzle 510 is adapted to apply slurry 500 to the wire web 200. Typically, slurry 500 contains abrasive particles for which the wire acts as a carried. First nozzle 510 is adapted to apply slurry 500 before the wire moves along substantially the first half from the starting side 201 to the end side 202 in wire moving direction 215. In other words, first nozzle 510 is adapted to apply slurry 500 before the wire cuts through semiconductor block 302. In addition to first nozzle 510, a second nozzle 520 is mounted between the starting side 201 and the end side 202. Also second nozzle 520 is adapted for applying slurry 500 to the wire web 200. However, second nozzle 520 is located such that the slurry is applied before the wire moves along substantially the second half from the starting side 201 to the end side 202 in wire moving direction 215. For example, second nozzle 520 may be located about halfway between the wire guide cylinders. In another embodiment, second nozzle 520 is located between first block 302 and second block 304. Thus, second nozzle 520 can apply slurry 500 to the web after the wire has cut through first block 302 and before this part of the wire cuts through second block 304. Since the slurry applied by first nozzle 510 is at least partially used by cutting first block 302, the additional application of slurry 500 by second nozzle 520 improves the sawing properties of the sawing device. However, the distance of second nozzle 520 from the wire web 200 is independent of the sawing process of sawing the semiconductor material 302, 304. For example, second nozzle 520 is not lowered together with the semiconductor blocks 302, 304 but maintains a fixed position with respect to web 200. In one embodiment, the distance DN between second nozzle 520 and the web remains substantially constant. In this context, the variation of distance DN due to the above-described abrasion effect will be considered as irrelevant. In particular, second nozzle 520 will typically not be mounted to a holder or similar mechanism adapted to lower the material to be sawed. Since the distance of second nozzle 520 from the wire web is independent of the sawing process, slurry can be applied to web 200 under constant conditions and with constant quality.

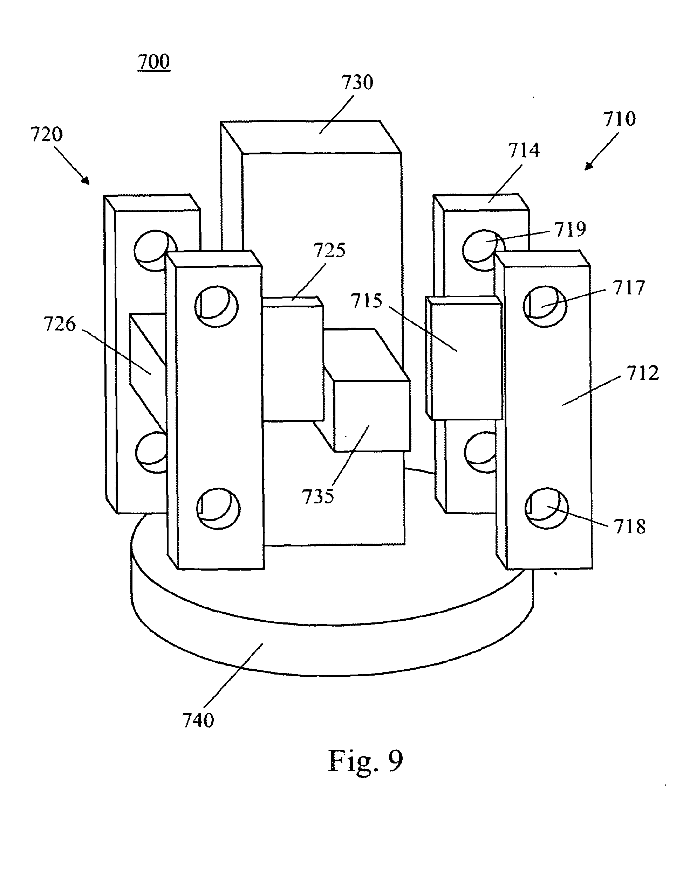

Fig. 9 shows a schematic perspective view of a modular cutting head 700 according to an embodiment. Modular cutting head 700 includes a left portion holder 710, a right portion holder 720, and a column 730 to which the left portion holder 710 and the right portion holder 720 can be mounted. Left portion holder 710 includes a front portion 712 and a rear portion 714. Front portion 712 and rear portion 714 are connected via a beam. The beam of left portion holder 710 is hidden in Fig. 7 but beam 726 of right portion holder 720 is shown. The beam of left portion holder 710 is formed similar to beam 726. Front portion 712 of left portion holder 710 includes an upper opening 717 and a lower opening 718. Likewise, rear portion 714 of left portion holder 710 includes an upper opening 719 and a lower opening. The upper openings 717, 719 of left portion holder 710 are coaxially aligned with each other. Likewise, also the lower openings of left portion holder 710 are coaxially aligned with each other. The openings of left portion holder 710 are adapted so that wire guide cylinders can be mounted between front portion 712 and rear portion 714. Furthermore, a connector 715 protrudes from the front portion 712 of left portion holder in a direction perpendicular of the beam. Right portion holder 720 is very similar to left portion holder and contains a connector 725 protruding toward connector 715 of left portion holder 710. Both connectors 710, 720 are adapted to form together a rigid connection between the left and right portion holders 710, 720. Furthermore, column 730 includes a protruding beam 735 extending substantially parallel with the beams of left and right portion holders 710, 720. In one embodiment, beam 735 and the beams of the left and right portion holders 710, 720 are adapted to be rigidly fixed to each other. In another embodiment, column 730 and the rear portions of the left and right portion holders 710, 720 are adapted to be rigidly fixed to each other. Furthermore, column 730 is mounted on a platform 740. In the above described embodiments, the left portion holder 710 and the right portion holder 720 define an adjustable length between each other and, thus, of the wire web 200 in the wire moving direction 215. In particular, the lateral distance between left portion holder 710 and right portion holder 720 may be adjusted using connectors 715 and 725. For example, the connectors 715, 725 may be adjustable themselves. In other embodiments, different sets of left and right portion holders 710, 720 may be manufactured, each set defining a different length for the working area(s) between the left and right portion holders. For example, the cutting head modularity may allow a configuration in which four smaller ingots or two larger ingots may be processed, or a configuration in which two smaller ingots or two larger ingots may be processed. It will be understood by those skilled in the art that, typically, that the applicable configuration will be chosen by a customer when ordering the sawing device and will remain fixed after manufacturing of the device. However, compared to the conventional design utilizing a single integrally cast iron piece the modular cutting head allows premanufacturing of parts and also higher flexibility.

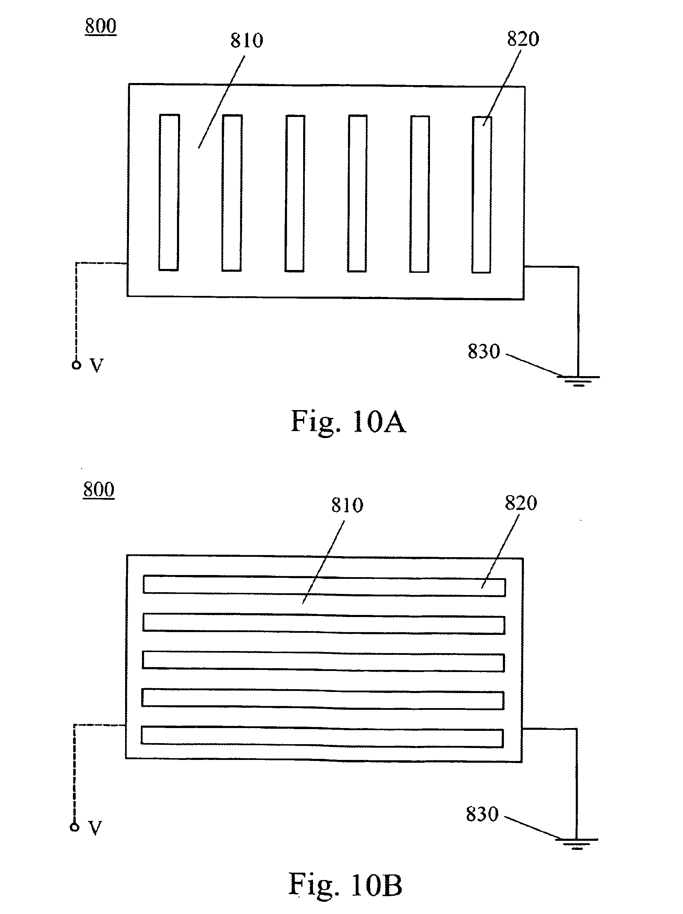

Figs. 10A and 10B show embodiments of a wire breakage detection unit 800. Wire breakage detection unit 800 can be electrically biased with respect to the wire web. Wire breakage detection unit 800 has a plurality of biased portions 810 and a plurality of openings 820 between the biased portions. In one embodiment, wire breakage detection unit 800 is an electrically conductive plate with a plurality of slits 820 forming a fence of electrical conductive portions 810. Slits 820 may be either formed as vertical slits (Fig. 10A) or horizontal slits (Fig. 10B). Typically, wire breakage detection unit 800 is located between the wire guide cylinders and the wire management unit. In one embodiment, wire breakage detection unit 800 is connected to ground potential 830. In this embodiment, a voltage is applied to wire web 200. During normal operation, wire web 200 and wire breakage detection unit 800 have no contact. However, in the event of a wire breakage the loose end of the wire will touch wire breakage detection unit 800, thus grounding wire web 200. This event can be detected and a wire breakage alert can be issued. In another embodiment, an electric potential is applied to wire breakage detection unit 800, and wire web 200 is grounded. Likewise, a contact between the loose end of the broken wire and the wire breakage detection unit 800 can be detected. However, inside the cutting area a considerable amount of slurry is applied to the web. Due to the wire speed and due to the sawing process, a mixture of slurry and abraded material splashes inside the sawing device. Accordingly, slurry and abraded material may accumulate on a wire breakage detection unit 800, thus deteriorating the electrical contact between wire and plate. However, slurry and/or abraded material can exit through the openings 820 so that the surface of wire breakage detection unit 800 facing the working area is not as contaminated as for a full plate. As a result, reliability and accuracy of wire breakage detection is improved.

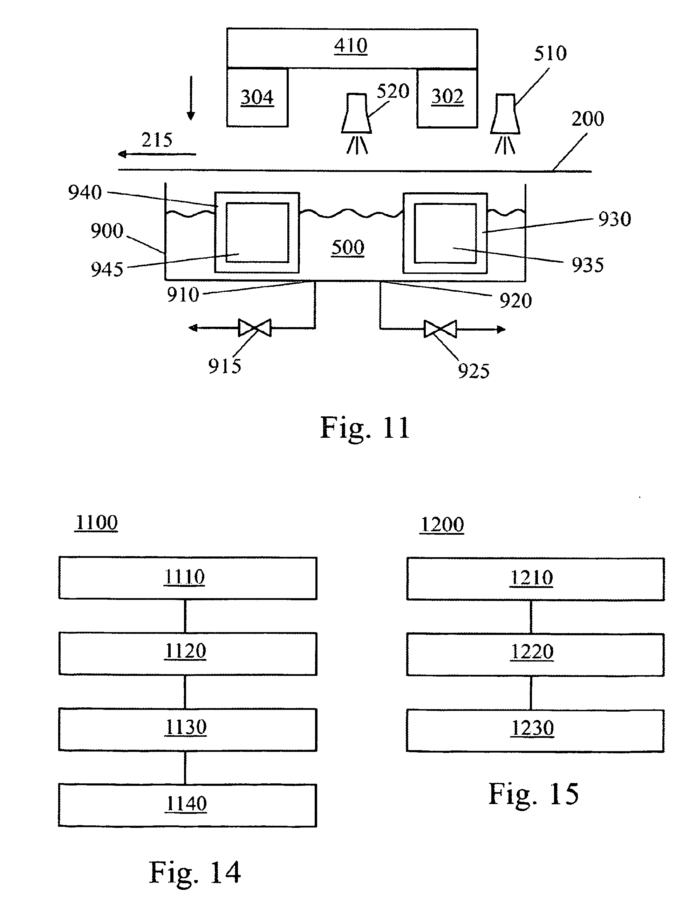

Fig. 11 shows embodiments of a wafer box 900 and wafer baskets 930, 940. Wafer box 900 is adapted to collect slurry 500 applied by nozzles 510, 520 and, in some embodiments, is also be adapted to collect a cleaning liquid, e.g. water, polyethylene glycol (PEG) or any other suitable cleaning liquid known in the art. Furthermore, wafer box 900 includes a first drain line 910 and a second drain line 920. First drain line 910 includes a first valve 915, and second drain line 920 includes a second valve 925. First drain line 910 is adapted to conduct slurry 500 and, in some embodiments, is connected to a slurry tank (not shown) so that the slurry 500 in wafer box 900 can be recycled. In one embodiment, the slurry tank has a capacity of several hundred liters, e.g. between 500 to 900 liters, and is mounted on wheels. Typically, slurry 500 will be reprocessed before it can be used again. Second drain line 920 is adapted to conduct a cleaning liquid, particularly water, polyethylene glycol (PEG) or any other suitable cleaning liquid known in the art. Typically, slurry and cleaning liquid do not mix, e.g. for an oil-based slurry and water being used as a cleaning liquid. Therefore, slurry and cleaning liquid can be separated and should also be treated separately. For example, second valve 925 may be closed during the sawing process while slurry 500 is applied. The slurry applied during the sawing process may be drained via first drain line 910 when the first valve 915 is open. After the slurry has been drained, first valve 915 is closed and second valve 925 may be opened. Then, a cleaning liquid may be applied to the sawed blocks 302, 304 of semiconductor material. The cleaning liquid is collected in wafer box 900 and may be drained via second drain line 920 when the second valve 925 is open.

In one embodiment, wafer baskets 930, 940 are provided within wafer box 900. Wafer baskets are adapted to accommodate the sawed blocks 302, 304 of semiconductor material. After the sawing process, the blocks contain a plurality of wafers which are still connected to holder 410. As will be described below in more detail, the present application discloses methods of in-situ dismounting these wafers from holder 410. Wafer baskets 930, 940 are adapted to hold the wafers after being dismounted. Typically, wafer baskets 930, 940 have openings 935, 945 through which slurry and/or cleaning liquid may enter and/or exit the interior of wafer baskets 930, 940. In particular, such openings may be provided in the front and/or rear walls as well as in the sidewalls and the bottom of wafer baskets 930, 940. In one embodiment, wafer baskets 930, 940 are formed by a metal frame following the edges of a rectangular box. Furthermore, wafer baskets 930, 940 are removably inserted into wafer box 900 so that wafer baskets 930, 940 together with the wafers can be removed from within wafer box 900. In one embodiment, wafer box 900 includes a front door (not shown) located at the front end of the sawing device opposite to the motors. Thus, the wafer baskets can easily be removed from within wafer box 900 via the front door. In one embodiment, the wafer baskets 930, 940 are mounted on rails inside wafer box 900.

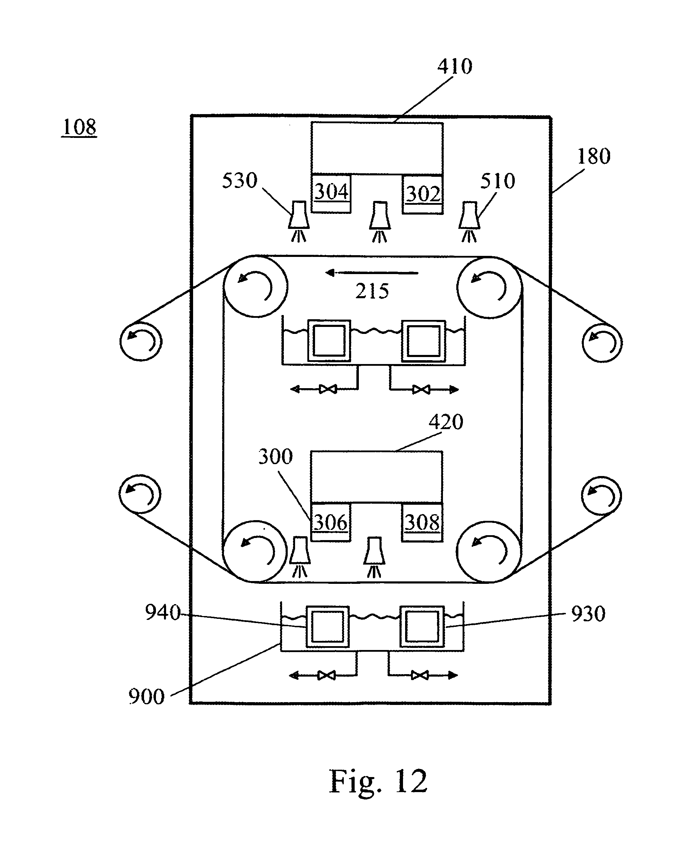

Fig. 12 shows a schematic front view of a wire saw device 108 according to an embodiment. Therein, the wire saw device 108 includes an enclosure 180 surrounding at least partially the working areas in which the semiconductor material is sawed into semiconductor wafers. Furthermore, wire saw device 108 includes a cleaning means for in-situ cleaning of the semiconductor wafers within the enclosure 180. In one embodiment, the cleaning means includes a beam 400 with conduits 405 as it is shown in Fig. 13. Therein, the lower portion of a beam 400 has a plurality of conduits 405. For example, a plurality of substantially parallel longitudinal conduits 405 may be formed in beam 400. At one end of conduits 405, a cleaning liquid can be supplied to the conduits 405. In a process which will be explained in more detail below, a fluid communication between conduits 405 and the space between adjacent wafers may be established. Thus, the wafers may be rinsed with cleaning liquid to remove remnants of slurry and/or abraded material from the wafer surfaces. The cleaning liquid can be collected in wafer boxes 900 and the cleaned wafers may be accommodated in wafer baskets 930, 940.

In a further embodiment, also separating means for in-situ separation of the semiconductor wafers from the holder 410,420 and/or beam 400 within enclosure 180 is provided. In one embodiment, the cleaning means and the separating means are integral in that the dismounting of the wafers is accomplished by supplying hot water to the conduits 405 after wafer cleaning has been performed. The hot water deglues the wafers from beam 400 so that the wafers are collected in wafer baskets 930, 940 which can be removed, e.g., via a front door in wafer box 900. In another embodiment, the connection between the wafers and beam 400 is cut by wire web 200 as will be explained in more detail below. Also in this case, the dismounted wafers will be collected in wafer baskets 930, 940.

Fig. 14 is a flow diagram of a cleaning method 1100 according to an embodiment. In particular, the cleaning method is a method for in-situ cleaning of semiconductor wafers within an enclosure of a wire saw device. The method 1100 includes a step 1110 of attaching a semiconductor material block to a beam having at least one conduit for feeding cleaning fluid. In a further step 1120, the semiconductor material block is sawed with a wire saw device to obtain a plurality of semiconductor wafers. In an even further step 1130, the beam is sawed such that fluid communication between the at least one conduit and a space between the semiconductor wafers is established. For example, the wire web may cut into the at least one conduit to provide the fluid communication. In another embodiment, the sawing is stopped when the wire web is located within the at least one conduit. In still a further step 1140, cleaning fluid is supplied to the at least one conduit to clean the semiconductor wafers. According to an embodiment, the cleaning liquid is water. In another embodiment, the cleaning liquid is polyethylene glycol (PEG). In alternatively or in addition any other suitable cleaning liquid known in the art may be used either alone or in a mixture with other cleaning liquids. In a further embodiment, the cleaning liquid is supplied for 8 to 20 min, particularly for 10 to 15 min. According to another embodiment, the cleaning liquid is supplied at an amount of 6 l/min up to 12 l/min. According to still another embodiment, the cleaning liquid is water having a temperature below 50°C.

In a further embodiment not shown in Fig. 14, a dismounting liquid is further supplied to the at least one conduit after step 1140. Thus, the semiconductor wafers are detached from the beam and, e.g., can be collected in wafer baskets. According to a further embodiment, the dismounting liquid is hot water having a temperature of 70°C or higher, particularly of 80°C to 90°C. In still a further embodiment, the dismounting liquid is supplied for 8 to 20 min, particularly 10 to 15 min. In an even further embodiment, the dismounting liquid is supplied at an amount of 6 l/min up to 12 l/min. In a further embodiment, the semiconductor wafers are supported by a wafer basket while being dismounted from the beam.

Fig. 15 is a flow diagram of a dismounting method 1200 according to an embodiment. In particular, the dismounting method is a method for dismounting semiconductor wafers from a beam after sawing. The method 1200 includes a step 1210 of sawing, with a wire saw device, a semiconductor material block in a direction of a predefined slicing plane to obtain a plurality of semiconductor wafers. In a further step 1220, the beam to which the semiconductor wafers are attached is sawed in the direction of the predefined slicing plane. After this step 1220, the sawed wafers are still attached to a beam. In order to dismount the wafers from the beam, the beam is sawed in a direction substantially perpendicular to the predefined slicing plane in step 1230. In other words, the cutting direction is changed from being perpendicular to the plane of the wire web to being in the plane of the wire web. In one embodiment, the beam is cut perpendicular to the slicing plane for at least the thickness of one semiconductor wafer. Since each wafer is connected to the beam only by a bar as thick as the wafer itself, it is sufficient that the perpendicular cut has only the length of the wafer thickness to cut though this bar. Thus, the wafers are dismounted from the beam. In a further embodiment, the semiconductor wafers are supported by a wafer basket while the beam is cut. It will be understood by those skilled in the art that the above described method may be performed on beams with and without conduits.

While the foregoing embodiments have been described with reference to four wire guide cylinders, it will be understood by those skilled in the art that most of the above disclosed concepts can be applied also to embodiments with only two wire guide cylinders likewise.

According to one embodiment which may be employed in combination with any of the embodiments or features described herein, a wire saw device for sawing at least one block of semiconductor material comprises a wire guide device adapted to guide a wire for forming at least one wire web, at least two wire management units each adapted for providing a wire to the wire guide device, wherein a first wire management unit of the at least two wire management units provides a first wire for forming a first wire web and a second wire management unit of the at least two wire management units provides a second wire for forming a second wire web, wherein the first and second wire webs together form a composite wire web, the composite wire web being continuous and being adapted for cutting the at least one block of semiconductor material.

According to another embodiment which may be employed in combination with any of the embodiments or features described herein, a wire saw device for sawing semiconductor material comprises a wire guide device adapted to guide a wire for forming at least two working areas of at least two wire web, at least one wire management units for providing a wire to the wire guide device, and at least two holders for holding each at least one block of semiconductor material, each holder of the at least two holders corresponding to a working area of the at least one wire web, wherein the at least two holders can be moved independently relative to the corresponding working areas of the at least one wire web.

According to an embodiment which may be employed separately or in combination with any of the embodiments or features described herein, a wire saw device for sawing semiconductor material comprises a wire guide device adapted to guide a wire for forming at least one wire web, wherein the wire in a working area of the wire web moves from a starting side of the working area to an end side of the working area in a wire moving direction, a first nozzle mounted in the vicinity of the starting side for providing slurry on the wire web before the wire moves along substantially the first half in wire moving direction from the starting side of the working area to the end side of the working area, and a second nozzle mounted between the starting side and the end side for providing slurry on the wire web before the wire moves along substantially the second half in wire moving direction from the starting side of the working area to the end side of the working area, wherein the distance of the second nozzle from the wire web is independent of the sawing process of sawing the semiconductor material.

According to still another embodiment which may be employed separately or in combination with any of the embodiments or features described herein, a wire saw device for sawing semiconductor material comprises a cutting head, a wire guide device adapted to guide a wire for forming at least one wire web, wherein the wire in a working area of the wire web moves from a starting side of the working area to an end side of the working area in a wire moving direction, wherein the cutting head includes a left portion holder for holding at least a first cylinder of the wire guide device and a right portion holder for holding at least a second cylinder of the wire guide device, and wherein the left portion holder and the right portion holder define an adjustable length of the wire web along the wire moving direction.

In one embodiment which may be employed in combination with any of the embodiments or features described herein, a wire saw device for sawing semiconductor material comprises a wire guide device adapted to guide a wire for forming at least one wire web, and a wire breakage detection unit being adapted to be biased for wire breakage detection, wherein the wire breakage detection has a plurality of biased portions and a plurality of openings between the biased portions.

In a further embodiment which may be employed in combination with any of the embodiments or features described herein, the wire breakage detection unit is an electrical conductive plate with a plurality of openings. In still another embodiment which may be employed in combination with any of the embodiments or features described herein, the plurality of openings is a plurality of slits forming a fence of electrical conductive portions.

In another embodiment which may be employed in combination with any of the embodiments or features described herein, a wire saw device for sawing semiconductor material comprises a wire guide device adapted to guide a wire for forming at least one wire web for sawing the semiconductor material, an enclosure in which the semiconductor material is sawed into semiconductor wafers, and a cleaning means for in-situ cleaning of the semiconductor wafers within the enclosure.

In a further embodiment which may be employed in combination with any of the embodiments or features described herein, the cleaning means is a cleaning and separating means for in-situ cleaning of the semiconductor wafers within the enclosure and for in-situ separation of the semiconductor wafers within the enclosure. In an even further embodiment which may be employed in combination with any of the embodiments or features described herein, the wire saw device may comprise a wafer box for collecting slurry and/or cleaning liquid. In one embodiment which may be employed in combination with any of the embodiments or features described herein, the wafer box includes at least one outlet valve for cleaning liquid and at least one outlet valve for slurry so that cleaning liquid and slurry may be separately removed from the wafer box. In still another embodiment which may be employed in combination with any of the embodiments or features described herein, the wire saw device comprises a wafer basket adapted for holding the wafers, particularly after dismounting the wafers from a beam to which they have been attached during the sawing process. In one embodiment which may be employed in combination with any of the embodiments or features described herein, a sidewall and/or a bottom wall of the wafer basket comprises at least one opening through which slurry and/or cleaning liquid may be dispensed from the wafer basket. According to a further embodiment which may be employed in combination with any of the embodiments or features described herein, the wafer basket is accommodated within the wafer box. In an even further embodiment which may be employed in combination with any of the embodiments or features described herein, the wafer box comprises at least one door through which the wafer basket may be removed from the wafer box.

According to an embodiment which may be employed in combination with any of the embodiments or features described herein, a method for in-situ cleaning of semiconductor wafers, comprises attaching a semiconductor material block to a beam having at least one conduit for feeding cleaning fluid, sawing, with a wire saw device, the semiconductor material block to obtain a plurality of semiconductor wafers and further sawing the beam such that fluid communication between the at least one conduit and a space between the semiconductor wafers is established, and supplying cleaning fluid to the at least one conduit to clean the semiconductor wafers.

In one embodiment which may be employed in combination with any of the embodiments or features described herein, the wire web cuts into the at least one conduit to provide the fluid communication. In another embodiment which may be employed in combination with any of the embodiments or features described herein, the sawing is stopped when the wire web is located within the at least one conduit. In still another embodiment which may be employed in combination with any of the embodiments or features described herein, the beam comprises a plurality of cylindrical conduits arranged in parallel. According to an embodiment which may be employed in combination with any of the embodiments or features described herein, the cleaning liquid is water. In a further embodiment which may be employed in combination with any of the embodiments or features described herein, the cleaning liquid is polyethylene glycol (PEG). In still further embodiments, the cleaning liquid may be another cleaning liquid known in the art which may be used either alone or in a mixture with a suitable other cleaning liquid. In a further embodiment which may be employed in combination with any of the embodiments or features described herein, the cleaning liquid is supplied for 8 to 20 min, particularly 10 to 15 min. According to another embodiment which may be employed in combination with any of the embodiments or features described herein, the cleaning liquid is supplied at an amount of 6 l/min up to 12 l/min. According to still another embodiment which may be employed in combination with any of the embodiments or features described herein, the cleaning liquid is water having a temperature below 50°C. In another embodiment which may be employed in combination with any of the embodiments or features described herein, a dismounting liquid is further supplied to the at least one conduit so that the semiconductor wafers are detached from the beam. According to a further embodiment which may be employed in combination with any of the embodiments or features described herein, the dismounting liquid is hot water having a temperature of 70°C or higher, particularly of 80°C to 90°C. In still a further embodiment which may be employed in combination with any of the embodiments or features described herein, the dismounting liquid is supplied for 8 to 20 min, particularly 10 to 15 min. In an even further embodiment which may be employed in combination with any of the embodiments or features described herein, the dismounting liquid is supplied at an amount of 6 l/min up to 12 l/min. In a further embodiment which may be employed in combination with any of the embodiments or features described herein, the semiconductor wafers are supported by a wafer basket while being dismounted from the beam.

According to an embodiment which may be employed in combination with any of the embodiments or features described herein, a method for dismounting semiconductor wafers from a beam after sawing comprises sawing, with a wire saw device, the semiconductor material block in a direction of a predefined slicing plane to obtain a plurality of semiconductor wafers, sawing a beam to which said semiconductor wafers are attached in the direction of the predefined slicing plane, and sawing the beam in a direction substantially perpendicular of the predefined slicing plane.

In one embodiment which may be employed in combination with any of the embodiments or features described herein, the beam is cut perpendicular to the slicing plane for at least the thickness of one semiconductor wafer. In a further embodiment which may be employed in combination with any of the embodiments or features described herein, the semiconductor wafers are supported by a wafer basket while the beam is cut.

While the foregoing is directed to embodiments of the invention, other and further embodiments of the invention may be devised without departing from the basic scope thereof, and the scope thereof is determined by the claims that follow.

## Claims

1. A wire saw device (100, 102, 104) for sawing semiconductor material (300) into wafers, comprising:
a wire guide device (110) adapted to guide a wire for forming at least one wire web (200) for sawing the semiconductor material wherein the wire guide device includes at least a first wire guide cylinder and a second wire guide cylinder; and
at least two wire management units (130, 140) each adapted for providing a wire to the wire guide device, wherein a first wire management unit (130) of the at least two wire management units provides a first wire for forming a first wire web (204) by providing the wire to the first wire guide cylinder and to the second wire guide cylinder and a second wire management unit (140) of the at least two wire management units provides a second wire for forming a second wire web (208) by providing the wire to the first wire guide cylinder and to the second wire guide cylinder; and
wherein the wire guide device and the at least two wire management units are adapted to provide the at least one wire web (200) such that an effective cutting area of 12 m²/h or more is provided.

2. The wire saw device according to claim 1, wherein the wire guide device (110) comprises a plurality of wire guide cylinders (112, 114, 116, 118), wherein each wire guide cylinder (112, 114, 116, 118) is connected to at least one motor (122, 124, 126, 128), in particular for directly driving the wire guide cylinder.

3. The wire saw device according to claim 1, wherein the wire guide device comprises at least four wire guide cylinders (112, 114, 116, 118) each connected to one of at least four motors (122, 124, 126, 128), each of the at least four motors being adapted to directly drive a corresponding wire guide cylinder, wherein one motor (122) of the at least four motors serves as a master motor and the remaining motors (124, 126, 128) of the at least four motors serve as slave motors following the master motor.

4. The wire saw device according to any of claims 1 to 3, wherein at least two working areas (210, 220) are formed by the wire guide device (110).

5. The wire saw device according to any of claims 1 to 4, wherein at least two blocks (302, 304; 306, 308) of semiconductor material are processed by one working area (210; 220).

6. The wire saw device according to any of claims 1 to 5,
wherein the first and second wire webs (204, 208) together form a composite wire web (200), the composite wire web (200) being continuous and being adapted for cutting the at least one block of semiconductor material.

7. The wire saw device according to any of the preceding claims, wherein
the wire guide device (110) is adapted to form at least two working areas (210, 220) of at least one wire web (200); and further comprising
at least two holders (410, 420) for holding each at least one block of semiconductor material (302, 304, 306, 308), each holder (410, 420) of the at least two holders corresponding to a working area (210, 220) of the at least one wire web (200), wherein the at least two holders (410, 420) can be moved independently relative to the corresponding working areas (210, 220) of the at least one wire web (200).

8. The wire saw device according to any of the preceding claims, wherein the wire in a working area (210, 220) of the wire web moves from a starting side (201) of the working area (210) to an end side (202) of the working area (210) in a wire moving direction (215); the wire saw device further comprising
a first nozzle (510) mounted in the vicinity of the starting side (201) for providing slurry (500) on the wire web (200) before the wire moves along substantially the first half in wire moving direction (215) from the starting side (201) of the working area (210) to the end side (202) of the working area; and
a second nozzle (520) mounted between the starting side (201) and the end side (202) for providing slurry (500) on the wire web (200) before the wire moves along substantially the second half in wire moving direction (215) from the starting side (201) of the working area (210) to the end side (202) of the working area, wherein the distance of the second nozzle (520) from the wire web (200) is independent of the sawing process of sawing the semiconductor material (302, 304).

9. The wire saw device according to any of the preceding claims, further comprising:
a cutting head;
wherein the wire in a working area (210) of the wire web (200) moves from a starting side (201) of the working area to an end side (202) of the working area in a wire moving direction (215);
wherein the cutting head includes a left portion holder (710) for holding at least a first cylinder (112) of the wire guide device (110) and a right portion holder (720) for holding at least a second cylinder (114) of the wire guide device, and wherein the left portion holder (710) and the right portion holder (720) define an adjustable length of the wire web (200) in the wire moving direction (215).

10. The wire saw device according to any of the preceding claims, further comprising:
a wire breakage detection unit (800) being adapted to be biased for wire breakage detection, wherein the wire breakage detection (800) has a plurality of biased portions (810) and a plurality of openings (820) between the biased portions.

11. The wire saw according to claim 10, wherein the wire breakage detection unit (800) is an electrical conductive plate with a plurality of openings (820), in particular a plurality of slits forming a fence of electrical conductive portions.

12. The wire saw device according to any of the preceding claims, further comprising:
an enclosure (180) in which the semiconductor material is sawed into semiconductor wafers;
a cleaning means (410) for in-situ cleaning of the semiconductor wafers within the enclosure (180).

13. The wire saw according to claim 12, wherein the cleaning means (410) is a cleaning and separating means for in-situ cleaning of the semiconductor wafers within the enclosure and for in-situ separation of the semiconductor wafers within the enclosure.

14. The wire saw device according to any of claims 12 or 13, further comprising a wafer box (900) for collecting slurry (500) and/or cleaning liquid.

15. The wire saw device according to any of claims 12 to 14, further comprising a wafer basket (930, 940) adapted for holding the wafers, particularly after dismounting the wafers from a beam (410) to which they have been attached during the sawing process.

16. A method for in-situ cleaning of semiconductor wafers, comprising
attaching a semiconductor material block to a beam having at least one conduit for feeding cleaning fluid;
sawing, with a wire saw device according to any of the preceding claims, the semiconductor material block to obtain a plurality of semiconductor wafers and further sawing the beam such that fluid communication between the at least one conduit and a space between the semiconductor wafers is established; and
supplying cleaning fluid to the at least one conduit to clean the semiconductor wafers.

17. The method according to claim 16, further comprising
supplying a dismounting liquid to the at least one conduit so that the semiconductor wafers are detached from the beam.

18. A method for demounting semiconductor wafers from a beam after sawing, comprising
sawing, with a wire saw device according to any of claims 1 to 15, the semiconductor material block in a direction of a predefined slicing plane to obtain a plurality of semiconductor wafers;
sawing a beam to which said semiconductor wafers are attached in the direction of the predefined slicing plane ; and
sawing the beam in a direction substantially perpendicular of the predefined slicing plane.

## Patentansprüche

1. Drahtsägenvorrichtung (100, 102, 104) zum Zersägen eines Halbleitermaterials (300) in Wafer, Folgendes umfassend:
eine Drahtführungsvorrichtung (110), die dazu angepasst ist, einen Draht zu führen, um mindestens ein Drahtfeld (200) zum Zersägen des Halbleitermaterials zu bilden, wobei die Drahtführungsvorrichtung mindestens einen ersten Drahtführungszylinder und einen zweiten Drahtführungszylinder umfasst; und
mindestens zwei Drahtleitungseinheiten (130, 140), die jeweils dazu angepasst sind, der Drahtführungsvorrichtung einen Draht bereitzustellen, wobei eine erste Drahtleitungseinheit (130) der mindestens zwei Drahtleitungseinheiten einen ersten Draht zum Bilden eines ersten Drahtfelds (204) bereitstellt, indem der Draht dem ersten Drahtführungszylinder und dem zweiten Drahtführungszylinder bereitgestellt wird, und eine zweite Drahtleitungseinheit (140) der mindestens zwei Drahtleitungseinheiten einen zweiten Draht zum Bilden eines zweiten Drahtfelds (208) bereitstellt, indem der Draht dem ersten Drahtführungszylinder und dem zweiten Drahtführungszylinder bereitgestellt wird; und
wobei die Drahtführungsvorrichtung und die mindestens zwei Drahtleitungseinheiten dazu angepasst sind, das mindestens eine Drahtfeld (200) so bereitzustellen, dass eine effektive Schneidefläche von 12 m²/h oder mehr bereitgestellt wird.

2. Drahtsägenvorrichtung nach Anspruch 1, wobei die Drahtführungsvorrichtung (110) mehrere Drahtführungszylinder (112, 114, 116, 118) umfasst, wobei jeder Drahtführungszylinder (112, 114, 116, 118) an mindestens einen Motor (122, 124, 126, 128) angeschlossen ist, um den Drahtführungszylinder insbesondere direkt anzutreiben.

3. Drahtsägenvorrichtung nach Anspruch 1, wobei die Drahtführungsvorrichtung mindestens vier Drahtführungszylinder (112, 114, 116, 118) umfasst, wovon jeder an einen von mindestens vier Motoren (122, 124, 126, 128) angeschlossen ist, wobei jeder der mindestens vier Motoren dazu angepasst ist, einen entsprechenden Drahtführungszylinder direkt anzutreiben, wobei ein Motor (122) der mindestens vier Motoren als übergeordneter Motor dient, und die übrigen Motoren (124, 126, 128) der mindestens vier Motoren als untergeordnete Motoren dienen, die dem übergeordneten Motor folgen.

4. Drahtsägenvorrichtung nach einem der Ansprüche 1 bis 3, wobei mindestens zwei Arbeitsbereiche (210, 220) durch die Drahtführungsvorrichtung (110) gebildet sind.

5. Drahtsägenvorrichtung nach einem der Ansprüche 1 bis 4, wobei mindestens zwei Blöcke (302, 304; 306, 308) aus Halbleitermaterial durch einen Arbeitsbereich (210; 220) bearbeitet werden.

6. Drahtsägenvorrichtung nach einem der Ansprüche 1 bis 5, wobei das erste und zweite Drahtfeld (204, 208) zusammen ein Verbunddrahtfeld (200) bilden, wobei das Verbunddrahtfeld (200) durchgehend und dazu angepasst ist, den mindestens einen Block aus Halbleitermaterial zu zerschneiden.

7. Drahtsägenvorrichtung nach einem der vorhergehenden Ansprüche, wobei
die Drahtführungsvorrichtung (110) dazu angepasst ist, mindestens zwei Arbeitsbereiche (210, 220) aus mindestens einem Drahtfeld (200) zu bilden; und darüber hinaus umfassend
mindestens zwei Halter (410, 420) zum Halten jedes mindestens einen Blocks aus Halbleitermaterial (302, 304, 306, 308), wobei jeder Halter (410, 420) der mindestens zwei Halter einem Arbeitsbereich (210, 220) des mindestens einen Drahtfelds (200) entspricht, wobei die mindestens zwei Halter (410, 420) unabhängig in Bezug auf die entsprechenden Arbeitsbereiche (210, 220) des mindestens einen Drahtfelds (200) bewegt werden können.

8. Drahtsägenvorrichtung nach einem der vorhergehenden Ansprüche, wobei sich der Draht in einem Arbeitsbereich (210, 220) des Drahtfelds in einer Drahtbewegungsrichtung (215) von einer Beginnseite (201) des Arbeitsbereichs (210) zu einer Endseite (202) des Arbeitsbereichs (210) bewegt; wobei die Drahtsägenvorrichtung darüber hinaus umfasst:
eine erste Düse (510), die in der unmittelbaren Nähe der Beginnseite (201) angebracht ist, um eine Aufschlämmung (500) auf dem Drahtfeld (200) bereitzustellen, bevor sich der Draht im Wesentlichen entlang der ersten Hälfte in der Drahtbewegungsrichtung (215) ausgehend von der Beginnseite (201) des Arbeitsbereichs (210) zur Endseite (202) des Arbeitsbereichs bewegt; und
eine zweite Düse (520), die zwischen der Beginnseite (201) und der Endseite (202) angebracht ist, um eine Aufschlämmung (500) auf dem Drahtfeld (200) bereitzustellen, bevor sich der Draht im Wesentlichen entlang der zweiten Hälfte in der Drahtbewegungsrichtung (215) ausgehend von der Beginnseite (201) des Arbeitsbereichs (210) zur Endseite (202) des Arbeitsbereichs bewegt, wobei der Abstand der zweiten Düse (520) vom Drahtfeld (200) unabhängig vom Sägeprozess zum Zersägen des Halbleitermaterials (302, 304) ist.

9. Drahtsägenvorrichtung nach einem der vorhergehenden Ansprüche, darüber hinaus umfassend:
einen Schneidkopf;
wobei sich der Draht in einem Arbeitsbereich (210) des Drahtfelds (200) in einer Drahtbewegungsrichtung (215) von einer Beginnseite (201) des Arbeitsbereichs zu einer Endseite (202) des Arbeitsbereichs bewegt;
wobei der Schneidkopf einen linken Abschnitthalter (710) zum Halten zumindest eines ersten Zylinders (112) der Drahtführungsvorrichtung (110) und einen rechten Abschnitthalter (720) zum Halten zumindest eines zweiten Zylinders (114) der Drahtführungsvorrichtung umfasst, und wobei der linke Abschnitthalter (710) und der rechte Abschnitthalter (720) eine in der Drahtbewegungsrichtung (215) einstellbare Länge des Drahtfelds (200) definieren.

10. Drahtsägenvorrichtung nach einem der vorhergehenden Ansprüche, darüber hinaus umfassend:
eine Drahtbrucherfassungseinheit (800), die dazu angepasst ist, zur Drahtbrucherfassung voreingestellt zu werden, wobei die Drahtbrucherfassungseinheit (800) mehrere voreingestellte Abschnitte (810) und mehrere Öffnungen (820) zwischen den voreingestellten Abschnitten besitzt.

11. Drahtsägenvorrichtung nach Anspruch 10, wobei die Drahtbrucherfassungseinheit (800) eine elektrisch leitfähige Platte mit mehreren Öffnungen (820), insbesondere mehreren Schlitzen ist, die einen Zaun aus elektrisch leitfähigen Abschnitten bilden.

12. Drahtsägenvorrichtung nach einem der vorhergehenden Ansprüche, darüber hinaus umfassend:
eine Umschließung (180), in der das Halbleitermaterial in Halbleiterwafer zersägt wird;
eine Reinigungseinrichtung (410) zur Vor-Ort-Reinigung der Halbleiterwafer in der Umschließung (180).

13. Drahtsägenvorrichtung nach Anspruch 12, wobei die Reinigungseinrichtung (410) eine Reinigungs- und Trenneinrichtung ist, um die Halbleiterwafer vor Ort in der Umschließung zu reinigen und die Halbleiterwafer vor Ort in der Umschließung zu trennen.

14. Drahtsägenvorrichtung nach einem der Ansprüche 12 oder 13, darüber hinaus einen Wafer-Kasten (900) zum Auffangen von Aufschlämmung (500) und/oder Reinigungsflüssigkeit umfassend.

15. Drahtsägenvorrichtung nach einem der Ansprüche 12 bis 14, darüber hinaus einen Wafer-Korb (930, 940) umfassend, der dazu angepasst ist, die Wafer zu halten, insbesondere, nachdem die Wafer von einem Träger (410) abgenommen wurden, an dem sie während des Sägeprozesses angebracht waren.

16. Verfahren zum Vor-Ort-Reinigen von Halbleiterwafern, Folgendes umfassend:
Anbringen eines Halbleitermaterialblocks an einen Träger, der über mindestens einen Kanal zum Einspeisen von Reinigungsfluid verfügt;
Zersägen des Halbleitermaterialblocks mit einer Drahtsägenvorrichtung nach einem der vorhergehenden Ansprüche, um mehrere Halbleiterwafer zu erhalten, und darüber hinaus Zersägen des Trägers, und zwar so, dass eine Fluidverbindung zwischen dem mindestens einen Kanal und einem Raum zwischen den Halbleiterwafern hergestellt wird; und
Zuführen von Reinigungsfluid zu dem mindestens einen Kanal, um die Halbleiterwafer zu reinigen.

17. Verfahren nach Anspruch 16, darüber hinaus umfassend:
Zuführen einer Ablöseflüssigkeit zu dem mindestens einen Kanal, so dass die Halbleiterwafer vom Träger gelöst werden.

18. Verfahren zum Abnehmen von Halbleiterwafern von einem Träger nach dem Zersägen, umfassend:
Zersägen des Halbleitermaterialblocks mit einer Drahtsägenvorrichtung nach einem der Ansprüche 1 bis 15 in einer Richtung einer vorbestimmten Schnittebene, um mehrere Halbleiterwafer zu erhalten;
Zersägen eines Trägers, an dem die Halbleiterwafer angebracht sind, in der Richtung der vorbestimmten Schnittebene; und
Zersägen des Trägers in einer zur vorbestimmten Schnittebene im Wesentlichen senkrechten Richtung.

## Revendications

1. Dispositif de scie à fil (100, 102, 104) permettant de scier du matériau semi-conducteur (300) en plaquettes, comprenant :
un dispositif de guidage de fil (110) apte à guider un fil pour former au moins une nappe de fil (200) pour scier le matériau semi-conducteur, où le dispositif de guidage de fil inclut au moins un premier cylindre de guidage de fil et un deuxième cylindre de guidage de fil ; et
au moins deux unités de gestion de fil (130, 140) aptes chacune à fournir un fil au dispositif de guidage de fil, où une première unité de gestion de fil (130) des au moins deux unités de gestion de fil fournit un premier fil pour former une première nappe de fil (204) en fournissant le fil au premier cylindre de guidage de fil et au deuxième cylindre de guidage de fil et une deuxième unité de guidage de fil (140) des au moins deux unités de gestion de fil fournit un deuxième fil pour former une deuxième nappe de fil (208) en fournissant le fil au premier cylindre de guidage de fil et au deuxième cylindre de guidage de fil ; et
où le dispositif de guidage de fil et les au moins deux unités de gestion de fil sont aptes à fournir l'au moins une nappe de fil (200) de sorte qu'une plage de coupe effective de 12 m²/h ou plus soit atteinte.

2. Le dispositif de scie à fil selon la revendication 1, où le dispositif de guidage de fil (110) comprend une pluralité de cylindres de guidage de fil (112, 114, 116, 118), où chaque cylindre de guidage de fil (112, 114, 116, 118) est raccordé à au moins un moteur (122, 124, 126, 128), en particulier pour entraîner directement le cylindre de guidage de fil.

3. Le dispositif de scie à fil selon la revendication 1, où le dispositif de guidage de fil comprend au moins quatre cylindres de guidage de fil (112, 114, 116, 118) connectés chacun à un d'au moins quatre moteurs (122, 124, 126, 128), chacun des au moins quatre moteurs étant aptes à entraîner directement un cylindre de guidage de fil correspondant, où un moteur (122) des au moins quatre moteurs sert de moteur maître et les moteurs restants (124, 126, 128) des au moins quatre moteurs servent de moteurs esclaves suivant le moteur maître.

4. Le dispositif de scie à fil selon l'une quelconque des revendications 1 à 3, où au moins deux zones de travail (210, 220) sont formées par le dispositif de guidage de fil (110).

5. Le dispositif de scie à fil selon l'une quelconque des revendications 1 à 4, où au moins deux blocs (302, 304 ; 306, 308) de matériau semi-conducteur sont traités par une zone de travail (210 ; 220).

6. Le dispositif de scie à fil selon l'une quelconque des revendications 1 à 5,
où les première et deuxième nappes de fil (204, 208) forment ensemble une nappe de fil composite (200), la nappe de fil composite (200) étant continue et étant apte à couper l'au moins un bloc de matériau semi-conducteur.

7. Le dispositif de scie à fil selon l'une quelconque des revendications précédentes, où
le dispositif de guidage de fil (110) est apte à former au moins deux zones de travail (210, 220) d'au moins une nappe de fil (200) ; et comprenant en outre
au moins deux fixations (410, 420) pour maintenir chacune au moins un bloc de matériau semi-conducteur (302, 304, 306, 308), chaque fixation (410, 420) des au moins deux fixations correspondant à une zone de travail (210, 220) de l'au moins une nappe de fil (200), où les au moins deux fixations (410, 420) peuvent être déplacées indépendamment relativement aux zones de travail correspondantes (210, 220) de l'au moins une nappe de fil (220).

8. Le dispositif de scie à fil selon l'une quelconque des revendications précédentes, où le fil, dans une zone de travail (210, 220) de la nappe de fil, se déplace d'un côté initial (201) de la zone de travail (210) vers un côté final (202) de la zone de travail (210) dans une direction de déplacement de fil (215) ; le dispositif de scie à fil comprenant en outre une première buse (510) montée à proximité du côté initial (201) pour appliquer du coulis (500) sur la nappe de fil (200) avant que le fil se déplace le long de sensiblement la première moitié en direction de déplacement de fil (215) depuis le côté initial (201) de la zone de travail (210) vers le côté final (202) de la zone de travail ; et
une deuxième buse (520) montée entre le côté initial (201) et le côté final (202) pour appliquer du coulis (500) sur la nappe de fil (200) avant que le fil se déplace le long de sensiblement la deuxième moitié en direction de déplacement de fil (215) depuis le côté initial (201) de la zone de travail (210) vers le côté final (202) de la zone de travail, où la distance de la deuxième buse (520) par rapport à la nappe de fil (200) est indépendante du processus de sciage du matériau semi-conducteur (302, 304).

9. Le dispositif de scie à fil selon l'une quelconque des revendications précédentes, comprenant en outre :
une tête de coupe ;
où le fil, dans une zone de travail (210) de la nappe de fil (200), se déplace depuis un côté initial (201) de la zone de travail vers un côté final (202) de la zone de travail dans une direction de déplacement de fil (215) ;
où la tête de coupe inclut une fixation de partie gauche (710) pour maintenir au moins un premier cylindre (112) du dispositif de guidage de fil (110) et une fixation de partie droite (720) pour maintenir au moins un deuxième cylindre (114) du dispositif de guidage de fil, et où la fixation de partie gauche (710) et la fixation de partie droite (720) définissent une longueur réglable de la nappe de fil (200) dans la direction de déplacement de fil (215).

10. Le dispositif de scie à fil selon l'une quelconque des revendications précédentes, comprenant en outre :
une unité de détection de rupture de fil (800) qui est apte à être inclinée pour la détection de rupture de fil, où la détection de rupture de fil (800) présente une pluralité de parties inclinées (810) et une pluralité d'ouvertures (820) entre les parties inclinées.

11. La scie à fil selon la revendication 10, où l'unité de détection de rupture de fil (800) est un plateau conducteur électrique présentant une pluralité d'ouvertures (820), en particulier une pluralité de fentes formant une cloison de parties conductrices électriques.

12. Le dispositif de scie à fil selon l'une quelconque des revendications précédentes, comprenant en outre :
une enceinte (180) dans laquelle le matériau semi-conducteur est scié en plaquettes semi-conductrices ;
un moyen de nettoyage (410) pour le nettoyage *in-situ* des plaquettes semi-conductrices à l'intérieur de l'enceinte (180).

13. La scie à fil selon la revendication 12, où le moyen de nettoyage (410) est un moyen de nettoyage et de séparation pour le nettoyage *in-situ* des plaquettes semi-conductrices à l'intérieur de l'enceinte et pour la séparation *in-situ* des plaquettes semi-condutrices à l'intérieur de l'enceinte.

14. Le dispositif de scie à fil selon l'une quelconque des revendications 12 ou 13, comprenant en outre une boîte à plaquettes (900) pour collecter du coulis (500) et/ou du liquide de nettoyage.

15. Le dispositif de scie à fil selon l'une quelconque des revendications 12 à 14, comprenant en outre un panier à plaquettes (930, 940) apte à maintenir les plaquettes, en particulier après le démontage des plaquettes à partir d'une barre (410) à laquelle elles ont été attachées pendant le processus de sciage.

16. Procédé de nettoyage *in-situ* de plaquettes semi-conductrices, comprenant
le fait d'attacher un bloc de matériau semi-conducteur à une barre présentant au moins un conduit pour l'arrivée de fluide de nettoyage ;
le sciage, avec un dispositif de scie à fil selon l'une quelconque des revendications précédentes, du bloc de matériau semi-conducteur pour obtenir une pluralité de plaquettes semi-conductrices et en outre le sciage de la barre de sorte qu'une communication fluidique entre l'au moins un conduit et un espace entre les plaquettes semi-conductrices soit établie ; et la fourniture de fluide de nettoyage à l'au moins un conduit pour nettoyer les plaquettes semi-conductrices.

17. Le procédé selon la revendication 16, comprenant en outre
la fourniture d'un liquide de démontage à l'au moins un conduit de sorte que les plaquettes semi-conductrices se détachent de la barre.

18. Procédé de démontage de plaquettes semi-conductrices à partir d'une barre après sciage, comprenant
le sciage, avec un dispositif de scie à fil selon l'une quelconque des revendications 1 à 15, du bloc de matériau semi-conducteur dans une direction d'un plan de tranchage prédéfini pour obtenir une pluralité de plaquettes semi-conductrices ;
le sciage d'une barre à laquelle lesdites plaquettes semi-conductrices sont attachées dans la direction du plan de tranchage prédéfini ; et
la sciage de la barre dans une direction sensiblement perpendiculaire au plan de tranchage prédéfini.
